# NEW EUROPEAN PATENT SPECIFICATION

(11) **EP 1 791 438 B2**
(45) Date of publication and mention of the opposition decision: **30.07.2014**
(45) Mention of the grant of the patent: 30.03.2011
(21) Application number: 05774596.0
(22) Date of filing: 22.08.2005
(51) Int. Cl.: A23C 11/08, A23C 11/10, A23C 11/00

(54) **POWDERED, COLD-WATER SOLUBLE/DISPERSIBLE, FOAMABLE COMPOSITION**
PULVERFÖRMIGE, KALTWASSERLÖSLICHE/DISPERGIERBARE, SCHAUMBARE ZUSAMMENSETZUNG
COMPOSITION EXPANSIBLE, DISPERSIBLE/SOLUBLE DANS L'EAU FROIDE ET PULVERULENTE

(30) Priority: 23.08.2004 EP 04077414
(43) Date of publication of application: 06.06.2007
(73) Proprietor: Friesland Brands B.V., 3818 LE Amersfoort (NL)
(72) Inventor: RIEGMAN, Riegman, Edwin, Aart, NL-8375 HE Oldemarkt (NL)
(74) Representative: Jansen, Cornelis Marinus
(86) International application number: PCT/NL2005/000607
(87) International publication number: WO 2006/022540

(56) References cited:
- EP-A- 0 923 301
- US-A- 4 401 657
- US-A- 6 048 567
- US-A1- 2001 041 211
- US-A1- 2004 105 923
- SCHLIMME E ET AL: "Milcheiweisse als Emulgatoren in Lebensmitteln." GORDIAN, vol. 86, no. 7/8, 1986, page 131, XP009056046

## Description

The invention relates to a powdered, cold-water soluble/dispersible, foamable composition for use in a food product, in particular a beverage product.

Powdered foamers, dairy as well as non-dairy, and (dairy) toppings are well known in the art and widely used for many years. Typical ingredients for powdered foamers / toppings are skimmed milk, (milk) proteins, lipids, carbohydrates, stabilizers, emulsifiers, free flowing agents and modified starches.

Powdered foamers are suitably produced by spray drying oil-in-water emulsions, containing (a part of) the above-mentioned components, and include entrapped gas. During the production the gas is injected in the emulsion just before the emulsion is passing the nozzle. Powdered toppings are also normally produced by spray drying oil-in-water emulsions, containing (a part of) the above-mentioned components; but do not contain entrapped gas.

The lipids in the product are usually based on lauric oils and fats e.g. (hydrogenated) coconut oil and palm kernel oil. The taste and flavour of the lipids in the foamers should preferably be bland to creamy coconut like. Further it is desirable that the shelf-life is long.

Usually powdered foamers / toppings are quickly dispersed/dissolved in hot beverages like coffee and tea. They are used because of their whitening capacity and provide taste and mouth feel.

Further, powdered foamers / toppings may be used to generate a foam layer on the hot beverage. With foamers this is generally obtained by the release of entrapped gas during dispersing / dissolving of the powdered foamer With toppings the foam layer is usually obtained by mechanical preparation during or directly after dispersing / dissolving of the powdered topping. This can be done e.g. in a vending machine or with a small mixer in a mug of coffee.

When using traditional powdered foamers / toppings in cold beverages, in particular at ambient temperature, such as a temperature of about 25 °C, or less, the powdered foamers / toppings are not or hardly dispersible or soluble. After addition, a significant part of the powdered foamer / topping including lumps of fat generally remains floating on the surface of the beverage. Only a small amount of the entrapped gas is released by traditional foamers. This results in a tiny and unequal foam layer with undissolved powder and lumps of fat, if any foam is formed at all. Consequently traditional powdered foamers and toppings are not suitable for use in cold beverages.

Powdered cold water dispersible creamers are already known and e.g. produced by spraying a small amount of lecithin on the surface of a traditional powdered creamer. This improves the wettability of the powdered creamer resulting in improved cold water dispersibility / solubility. However, for applications with a desired foam layer on top the use of lecithin is undesirable. The surface active properties of lecithin may have a considerable and sometimes tremendous negative effect on the foam layer and on the stability of the foam layer on top of the (cold) beverage.

A possible solution to solve the problem of producing a powdered cold water dispersible foamer / topping involves the use of specific oils. When using edible oil with a melting point below 20 °C, and preferably below 0 °C, a powdered cold water dispersible foamer / topping can be developed.

EP-A 923 301 describes an agglomerated powdered creamer based on a protein, a sweetener and a low melting edible oil, such as triglycerides with a high content of oleic acid. According to the examples, the agglomerated particles, based on high oleic sunflower oil, coated with lecithin, are cold-soluble.

However for cold beverages like cold coffee-, tea- and chocolate drinks the taste of the powdered foamer / topping is very important. In addition to the initial taste, also the taste stability is very important.

Traditional edible oils like soybean oil, rapeseed oil, and sunflower oil do not have a bland initial taste and are moreover very sensitive towards oxidation which generally leads to adverse taste effects. Therefore, the applicability of these oils for this application is not sufficient. The so-called high oleic oils (i.e. oils having oleic acid (C18:1) as the major component typically in a concentration of more than 50 wt. %), high oleic sunflower oil and high oleic canola oil, as mentioned in EP-A 928 301, have been found to be not well suitable for this application either. Although they are less sensitive towards oxidation, it is found that the shelf-life is still limited.

Further, EP-A-923 301 requires agglomeration of particles after drying. This requirement is a drawback from a manufacturing point of view as it requires an additional manufacturing step, introducing extra costs.

Finally, US 2001/0041211 discloses a cold beverage creamer that is soluble in cold water and that has been developed so as to withstand repeated freeze-thaw cycles. In one embodiment, a foamer is included, but this does not result in an acceptable cold-foamable powder.

It is an object of the present invention to provide a novel cold-soluble/dispersible composition that can be used as a foamer, creamer or topping for a food product, in particular a beverage, more in particular a cold beverage.

It is another object of the invention to provide a cold-soluble/dispersible (foamable) composition with a prolonged shelf-life.

It is further an object of the invention to provide a cold-soluble/dispersible (foamable) composition with improved bland taste and/or creamy sensation.

In addition it is an object of the invention to provide a novel method for preparing a composition that can be used as a cold soluble / dispersible creamer, foamer or topping.

It has now been found that one or more of said objects can be realised by providing a composition in the form of a particulate material wherein particles are present that are formed of a mixture of a specific foam stabiliser and a specific lipid.

Accordingly, the present invention relates to a powdered, cold-water soluble/dispersible, foamable composition, having particles that comprise a mixture of a water-soluble/dispersible foam stabiliser and a medium chain triglyceride oil, wherein at least 50 wt.% of the lipid content is formed by the medium chain triglyceride oil, with the proviso that the composition does not comprise a combination of 20-40% by weight of skim milk powder, obtained by decomposing 50 to 95% by weight of lactose contained in the original skim milk powder, and 5 to 15% by weight of medium chain glycerides, wherein a gas is entrapped in the particles and wherein the particles comprise up to 70 wt. % of dried skimmed milk, preferably about 10-50 wt. %.

The disclaimer is made in view of US 4,401,657, which relates to an enteral feeding composition.

More in particular, the present invention relates to a powdered, foamable composition, having particles that comprise a mixture of (i) a watersoluble/dispersible protein, a n-OSA starch or a combination thereof and (ii) a medium chain triglyceride (MCT) oil.

The composition according to the invention has been found very suitable for use as a foamer or topping, being able to generate a frothy foam layer on the top of a food product such as a beverage.

In particular, the MCT oil has been found to be contribute to the cold water solubility / dispersibility of the composition. The composition according to the invention has been found particularly suitable to form a foam on a beverage with a fine and soft, yet firm, structure.

It has been found that a composition according to the invention can be dissolved/dispersed in a cold aqueous liquid without leaving lumps of fat at the surface and allowing the effective release of gas which may be entrapped in the particles, to contribute to foam formation.

In particular a composition according to the invention has been found very suitable to form a foam on a cold food product, in particular a beverage product, although a composition may be used to form a foam on a warm food product, such as a hot drink.

It has further been found that a composition according to the invention has a better bland to creamy coconut like taste than a comparable composition, wherein as the oil component high oleic oils, such as sunflower oil, rapeseed oil, safflower oil or soybean oil with a very high content of oleic acid are present, instead of MCT oils.

In addition, the shelf-life of a composition according to the invention is satisfactory, and usually better than the shelf-life of a comparable composition wherein the MCT oil has been replaced by high oleic oil.

The shelf life is the period of time during which, under usual storage conditions, the product remains chemically and sensorically acceptable. After this typical period of time has been elapsed the product will begin to show unacceptable chemical and sensorical deviations. Sensorical deviations such as taste and smell can routinely be determined by a test panel. With respect to chemical deviations, in particular the degree of lipid oxidation is meant.

Typically, desirable shelf lives for creamer / foamer / topping compositions as described above are at least about 18 months, preferably 24 months or more.

In accordance with the present invention such a shelf-life is reached without undue burden, in contrast to a comparable composition known in the art such as a composition according to EP-A 923 301. It has been found that with such a composition a shelf life of up to about 12 months is achievable.

Further, the use of MCT oil in a composition according to the invention is found to be very interesting for special food applications like e.g. foodstuffs for infants and sport nutrition foodstuffs. In this kind of applications it is used as a high quality easy digestible fat source; MCT's are not stored as depot fat like the longer chain triglycerides. MCT's do not increase the cholesterol levels in humans. Another advantage of MCT's is the absence of Trans Fatty Acids.

Within the context of the present invention, a composition is considered foamable if it is capable of forming a foam when dissolved or dispersed in water or an aqueous liquid. Such foam may form upon dissolution/dispersion of the composition aided by gas entrapped in the composition, in which case the composition may be referred to as a foamer. The formation of the foam may also be caused mechanically during or after dispersing/dissolving the powdered composition e.g. with a mixer, by a jet stream forced through a nozzle, or by manual stirring. A particular example is the use of a powdered composition for generating foam in vending systems, which make use of mechanically induced foam formation. Further foaming may be caused by bubbling or forcing a gas through the solution or dispersion. A composition that forms a foam upon subjecting it to treatment with a mixer, stirring or bubbling of a gas may be referred to as a topping.

A composition is also deemed foamable, if a powdered foam generating composition is added to a creamer composition comprising the foam stabiliser and the MCT-oils. Such a powdered foam generating composition may contain 3-18 ml gas per gram of foam generating composition.

More in particular a composition is considered foamable, if it forms a foam of at least 2 mm thickness when subjected to the following regular foaming test, wherein 10 g, preferably 6 g, more preferably 4 g of the composition is used:
As a beverage-base a powdered instant iced coffee product based on sugar and instant coffee, but free of milk components is used. The coffee product typically comprises 10-15 wt. % coffee, 1-2 wt. % aroma and salt, balance sugar. Such coffee is commercially available from e.g. Krüger, Nestlé or Tchibo.
   - Put 10 g. of the powdered instant iced coffee product in a standardized laboratory beaker (250 ml, diameter 62 mm)
   - Add the powdered composition (10, 6 or 4 g), to be tested upon foamability. Mix the components thoroughly.
   - Put 150 ml. cold water (10 °C) on the dry mixture and stir well during 6 s..
   - After 60 s. the foam thickness is measured.

The term "cold" is used herein to describe a condition of about ambient or below ambient temperature. In particular the term is used to refer to a temperature of about 25 °C, preferably about 20 °C, more preferably about 10 °C or less to as low as non-frozen. A condition is considered "warm" if the temperature is higher than used for describing a cold condition. The term "hot" is used in particular to describe a temperature higher than about 60 °C, more in particular temperatures within the range of 70-100 °C.

A foamable composition or foamable component is considered cold-soluble respectively cold-dispersible if it can be dissolved respectively dispersed in cold water or a cold aqueous liquid in a sufficient amount to form a foam on the liquid after dissolving/dispersing (and optionally using an aid as described above).

A composition or component is in particular considered cold-soluble respectively cold-dispersible if it is dissolvable/dispersible in water in an amount of at least about 10 g/L, at a temperature of about 20 °C, more in particular in an amount of at least about 25 g/L, even more in particular at least about 40 g/L. The dissolution time under stirring should preferably be less than 60 sec.

When the terms "about", and "substantially (all)" are used herein, this is at least meant to include a deviation of up to 10 %, in particular of up to 5 %, more in particular of up to 2 %.

The term "essentially free" is used to describe that no traceable amount (as detectable by conventional means at the filing date) or only a minor amount of a particular component is present in the composition. In particular this term is used to indicate an amount of less than 0.5 wt. %, more in particular an amount of less than 0.1 wt. % of the component of which the composition is essentially free.

The term "medium chain triglyceride" (MCT) oil is generally understood in the art for a specific group of lipids. In particular, the term is used herein to describe a saturated triglyceride or a mixture of several saturated triglycerides wherein the number average chain length of the fatty acid residues is in the range of 6-12 carbon atoms, preferably 8-10 carbon atoms. Preferably at least the majority of the fatty acid residues have chain length of 8-10 carbon atoms.

An MCT oil may very suitably be prepared in a manner generally known in the art from coconut or palm kernel oil by esterification of the fractionated medium chain length fatty acids.

Generally, an MCT oil has a cloud point, as determined by AOCS Cc 6-25 below 10 °C, preferably below - 5 °C.

In addition to MCT oil, one or more other lipids may be present in the composition according to the invention. Examples include edible oils such as high oleic sunflower oil, high oleic rapeseed oil, high oleic safflower oil, high oleic soybean oil, coconut oil and palm kernel oil.

It is also possible to use slightly hydrogenated vegetable oils, such as oil from sunflower, rape or soybean, preferably in a concentration not exceeding 35 wt. % based upon the total weight of lipids. Slightly hydrogenated means herein a hydrogenation low enough to maintain the melting point of the oil below 20 °C, preferably below 15 °C.

Any of these other oils (not MCT oils) are in particular used for economic reasons.

In practice, the ratio of MCT oil to the optionally present other lipids is chosen such that the mixture forms a stable composition at ambient temperature for a time period of least 18, preferably at least 24 months or more. Stable is defined herein as being sufficiently resistant to oxidation for such period of time, to maintain the desired shelf life. In particular the ratio is chosen such that melting point of the lipid mixture is less than about 20 °C, preferably less than about 10 °C more preferably less than about 0 °C. (as determined by the slip melting point ISO 6321:1991)

The total lipid content as a percentage of the total composition (dry weight) preferably is about 5-60 wt. %, more preferably about 10-50 wt. %.

In view of desirable taste and whitening power, a lipid content of at least about 15 wt. % is much preferred.

A content of up to about 30 wt. % has been found very satisfactory in terms of desirable properties and economy, in particular if it is desired that the taste and whitening power is fairly subtle. Compositions with a contents of over 30 wt. % lipids are typically very rich in taste and whitening power.

As a water-soluble/dispersible foam stabiliser, any food grade foam stabiliser can be used. Preferably it also is an emulsion stabiliser for stabilising the emulsion which may be formed when the composition is dissolved/dispersed in a cold food product such as a cold beverage.

In particular any edible water soluble or water dispersible protein. may be used. Preferably a milk protein, a plant derived protein or mixture thereof, is present as a water-soluble/dispersible protein. Soy protein and wheat protein are examples of suitable plant derived proteins. Examples of particularly suitable milk proteins are whey proteins and casein and caseinates, and especially combinations thereof.

Besides a protein, it is possible to use a chemically modified starch as a foam stabiliser, in particular an ester derivative of a starch, preferably a starch derivatised with an alkenylsuccinic acid, e.g. a C6-C12 alkenylsuccinic acid. A preferred modified starch in a composition according to the invention is a n-OSA starch. n-OSA starch is the abbreviation for n-octenylsuccinic acid modified starch. An alkenylsuccinic acid derivative of a starch, such a n-OSA starch, may be prepared by forming a covalent complex of a hydrophilic waxy maize starch with an alkenylsuccinic acid moiety, preferably its anhydride. Production of such starch usually takes place under alkaline conditions in water. The percentage molar substitution of alkenylsuccinic acid groups, in particular n-octenylsuccinic acid groups, may be in the range of about 2 to 3% (i.e. on average about 2-3 % of the monosaccharide units in the starch comprises an alkenylsuccinic acid residue) . The molecular weight of the starch, in particular n-OSA starch, is preferably in excess of about 5,000 kDa. A suitable n-OSA starch is commercially available form e.g. National Starch under the trade name Hi Cap 100. Such starch may be present in a similar concentration as the protein.

In a preferred embodiment, a composition according to the invention has been made with milk powder as a source for a water-soluble/dispersible protein. Skimmed milk powder is particularly preferred. Skimmed milk powder is considered advantageous in comparison to whole milk powder, because of the better cold water solubility. It is contemplated that this is due to the low amount of butter fat in skimmed milk. Butter fat may adversely affect cold water solubility, especially at a high concentration.

The composition of the invention contains up to about 70 wt. % of dried skimmed milk, in particular about 10 to 60 wt. % skimmed milk Optionally additional (milk) protein may be added in addition to the milk proteins present in the milk, in particular in an amount of up to about 10 wt. %, based upon the total weight of the composition. The total foam stabiliser content, in particular total protein content, in a composition according to the invention is preferably up to about 35 wt.% more preferably about 1-30 wt. % based upon the total weight, even more preferably about 5-20 wt. % based upon the total weight of the composition.

Optionally, a composition according to the invention comprises one or more additional components. Such component may be present in a mixture with the foam stabiliser, in particular the water-soluble/dispersible protein, and the MCT oil, it may be present as a separate layer of the particle, and/or it may be present as (part of) a separate particle in the composition.

Preferably, at least one additional component is present selected from the group consisting of matrix materials, sweeteners, emulsifiers, stabilisers, free flowing agents and starches.

For improving free flowing properties of the powdered composition, an additional matrix material may be present in the mixture with MCT oil and the foam stabiliser. Preferred examples of additional matrix materials are carbohydrates, such as monosaccharides, oligosaccharides (in particular having 2-10 monosaccharide units) and polysaccharides (in particular having more than 10 monosaccharide units), including blends thereof.

Very suitable are carbohydrates such as glucose syrup, glucose, lactose, sucrose, fructose, maltodextrin, and the like, and mixtures of these sugars. Glucose syrup and lactose are particularly suitable since these carbohydrates are very effective in providing non-hygroscopic and free flowing powders.

Maltodextrin, either alone or in combination with other sugars, may also be used; particularly if a product having less sweetness is desired.

If present, the content of additional matrix material, such as carbohydrate, is preferably at least about 5 wt. % based upon the total weight of the powdered composition. Good results have been achieved with a content up to about 60 wt. % based upon the powdered composition. For high whitening power and/or rich milky taste, the concentration of additional matrix materials is preferably less than 20 wt. %. For high whitening power and rich milky taste the composition according to the invention is more preferably essentially free of additional matrix material.

The composition may also contain an effective amount of one or more artificial sweeteners (intense sweeteners) such as saccharin, cyclamates, acetosulfame, L-aspartyl based sweeteners such as aspartame, and mixtures of these. Depending sweetening power of the compound and the desired sweetening effect, the skilled person will know to choose a suitable concentration.

In addition to foam stabiliser, such as protein, an emulsifier may be used to influence the functionality of the composition, e.g. the whitening power and or the creaminess of the composition. Preferred examples of emulsifiers are mono- and diglycerides of fatty acids, acetic acid esters of mono- and diglycerides of fatty acids, lactic acid esters of mono- and diglycerides of fatty acids, citric acid esters of mono- and diglycerides of fatty acids, tartaric acid esters of mono- and diglycerides of fatty acids, or mixtures of the above mentioned esters, sucrose esters of fatty acids, sodium stearoyl-2-lactylate and sorbitan esters of fatty acids, including mixtures thereof. An emulsifier may be used in a concentration of 0-5 wt. %, e.g. 0.1 to 2.5 wt. %.

Good results with respect to foaming, have been realised with a composition essentially free of added emulsifiers that are detrimental to the foam stability. In particular, it has been found that the presence of an added emulsifier such as lecithin may be highly detrimental to formation or the quality of the foam, whereas in the absence thereof a satisfactory dissolution/dispersion is realised and a very stable foam is obtained.

For improving the flowing characteristics, the surface of the particles may be provided with a free flowing agent, such as silicon dioxide, sodium silica aluminate or a tricalcium phosphate. A relatively low amount, e.g. about 0.1 to 0.5 wt. % based upon the total weight is generally sufficient.

A stabiliser may be used to enhance the stability of the foam and/or the emulsion. Preferred examples of stabilisers are potassium or sodium salts of citrates, orthophosphates, diphosphates, triphosphates and poly phosphates. The total concentration of stabilisers is preferably about 0.1-3.0 wt %.

Some water may be present in the particles. Preferably the water content of the composition is less than about 3.5 wt. %.

Further, one or more additives selected from flavouring agents, colouring agents, antioxidants and other additives conventionally used in foamers or toppings, may be present. The total amount of such additives is usually less than 1.0 wt. %.

The majority of the particles preferably has a diameter of less than 1.5 mm, as determined by the enveloping circle. More preferably, substantially all particles have a diameter of less than 1.5 mm, in particular of less than 1.2 mm, more in particular of less than about 0.8 mm. In practice it is preferred that the at least the majority of the particles, more preferably essentially all particles have a diameter of at least about 0.05 mm.

The particles have a gas entrapped in it, resulting in particles with (closed) pores. As a gas is entrapped in the particles, the density is less than for dense particles. Preferably, the density is about 100-300 g/L for particles with entrapped gas. In principle any gas, suitable for use in food may be used. Very suitable are nitrogen, carbon dioxide, air and mixtures thereof.

The invention further relates to a food product comprising a composition according to the invention. In addition such product generally comprises a foodstuff (e.g. a beverage concentrate or the like) in dried form.

The food product is preferably selected from the group consisting of beverages, in particular instant beverages. More preferably the beverage is selected from ice coffee, (cold) coffee flavoured beverages, ice tea, (cold) chocolate drinks, (cold) fruit beverages, (cold) sport beverages, (cold) energy beverages, (cold) healthy drinks, (cold) dairy beverages, (cold) soups and sauces, (cold) alcohol containing beverages and milkshakes.

The amount of the foamable powdered composition in the food product is preferably about 5 wt. % up to about 95 wt. % based upon the dry weight of the food product, more preferably about 15-60 wt. %.

The invention further relates to a method for preparing a composition as claimed, comprising providing an aqueous mixture of the medium chain triglyceride, the foam stabiliser , such as the protein or the chemically modified starch, and optionally one or more additional components, and thereafter drying the aqueous mixture, thereby forming the powdered composition. The process conditions may *e.g.* be derived from the method described in EP -A 923 301*, mutatis mutandis.*

The aqueous mixture may very suitably be provided by adding the required ingredients to water, e.g. in a mixing tank, to a total concentration of ingredients for the composition (ultimately forming the particles) of up to about 75 wt. % based upon the total weight of the aqueous mixture, preferably of about 50-70 wt. %.

The aqueous mixture preferably has an elevated temperature, such as in the range of about 55-75 °C, more preferably up to about 70 °C.

The mixture may be homogenised, such as by pressurisation. Very suitable is a multi-stage homogenisation wherein the mixture is first subjected to a relatively high pressure, such as in the range of about 100 - 300 bar and thereafter to a relatively low pressure such as in the range of about 20 - 50 bar.

The mixture is then preferably pasteurised, e.g. at a temperature of about 70° C to 90 °C for an appropriate time. Such time can routinely be determined by the skilled person.

In case the composition is intended for use as a foamer, a gas is introduced in the aqueous mixture to be entrapped. This can suitably be done by introducing the gas in the mixture in an amount sufficient to cause foaming, preferably in an amount sufficient to cause a foam layer of at least 2 mm, more preferably of at least 5 mm in the regular foaming test as described above.

The aqueous mixture may suitably be dried by any spray drying equipment for drying creamer compositions known to hose skilled in the art.

Advantageously use is made of a Filtermat ^{®} spray drying tower or the like. Such a Filtermat ^{®} tower is *e.g*. described in Milk Powder Technology Evaporation and Spray Drying, Vagn Westergaard NIRO A/S Copenhagen, Denmark, fourth edition 1994.

By spray drying in such a tower, a limited aggregation of particles is realised, usually leading to agglomerates with a diameter of less than 1.5 mm, preferably less than 1.2 mm. Said aggregates have been found to have a advantageous dissolution speed, when used.

Suitable conditions can be determined in a routinely manner.

After drying, free flowing agent may be added to the dried particles. Suitable conditions are also known in the art.

After drying the particles, optionally mixed with a food product, they are preferably packaged without subjecting the particles to a (separate) agglomeration step. This provides an additional advantage, in that the manufacturing of the composition is simplified by omitting an agglomeration step after the drying.

The invention will now be illustrated by the following examples.

### Example 1

An amount of water, adjusted to obtain about 60 % dry solids in the oil-in-water emulsion, was added to a mixing tank. The temperature was increased to about 60 °C. Skimmed milk powder was added to the mixing tank in an amount to provide about 35 % by weight of the resulting powdered foamer. After dispersing / dissolving the skimmed milk powder, MCT-oils were added to the mixing tank in such an amount to provide about 22 % by weight of the resulting powdered foamer. Glucose syrup was added to the mixture in the mixing tank in an amount to provide about 41 % by weight of the resulting powdered foamer. Dipotassiumphosphate was added to the mixture in the mixing tank in an amount to provide about 2 % by weight of the resulting powdered foamer.

After all the components had been dispersed / dissolved completely the mixture was homogenized in two stages at about 60 °C. The pressure in the first stage was about 160 bar; in the second stage about 30 bar. After homogenization the oil-in-water emulsion was pasteurized for about 1 minute at about 80 °C. After pasteurization gas (carbon dioxide) was injected in such an amount to provide about 8 mm. of foam in a regular foaming test, as described above.

Thereafter, the emulsion including entrapped gas was pumped to a Filtermat spray tower and spray-dried to provide a powdered foamable composition with a particle size smaller than about 1.5 mm, containing maximum 3 ½ % by weight moisture. About 0.5 % silicon dioxide was added just after spray-drying to obtain a good flowability.

Foaming properties were evaluated with the test as described above. An iced coffee with a frothy foam layer on top was created.

The foam height is dependent of the amount of entrapped gas and is normally found to be between 2 and 25 mm, depending on the amount of entrapped gas. The foam had a fine and soft structure, but was still firm.

### Example 2 (reference)

A powdered composition produced as described in example 1 but containing hydrogenated coconut oil instead of MCT-oils.

When testing the powdered composition under the same conditions as for Example 1, no frothy foam layer on top was created. Rather, only a very tiny and unequal foam layer with undissolved powder and lumps of fat, floating on the surface, was observed.

### Example 3

As a beverage-base, a powdered instant chocolate drink product based on carbohydrates (a.o. sugar, dextrose and lactose) and fat reduced cocoa powder, but free of milk components was used. The chocolate drink product comprised 15-20 wt. % low fat cocoa powder, 1-3 wt. % emulsifiers, salt, vitamines and aroma, balance carbohydrates. Such chocolate drink product is commercially available from e.g. Krüger or Nestlé. 10 g. of the powdered instant chocolate drink product as put in a standardized laboratory beaker (250 ml, diameter 62 mm)
- the powdered composition (6 g), to be tested upon foamability, was added
- the components were mixed thoroughly.
- 150 ml. cold water (10 °C) was put on the dry mixture and stirred well during 6 s..
- After 60 s. the foam thickness was measured.

When testing the powdered composition with the regular foaming test as described above a cold chocolate drink with a frothy foam layer on top was created. The foam height is dependent of the amount of entrapped gas and is normally between 2 and 25 mm, depending on the amount of entrapped gas. The foam had a fine and soft structure, but was still firm.

### Example 4

A powdered foamer produced as described in example 1 but containing the following ingredients:
30 % MCT-oil
18 % Skimmed milk (powder)
2 % Caseine
48 % Glucose syrup
2 % Dipotassium phosphate

### Example 5 (reference)

An amount of water, selected to obtain about 55 % dry solids in the oil-in-water emulsion, is added to a mixing tank. The temperature is increased to about 70 °C. Skimmed milk powder is added to the mixing tank in such an amount to provide about 41 % by weight of the resulting powdered foamer. After dispersing / dissolving the skimmed milk powder, glucose syrup is added to the mixture in the mixing tank in an amount to provide about 27 % by weight of the resulting powdered foamer. MCT-oils are added to the mixing tank in such an amount to provide about 30 % by weight of the resulting powdered foamer. Dipotassium phosphate is added to the mixture in the mixing tank in an amount to provide about 1½ % by weight of the resulting powdered topping.

After all the components have been dispersed / dissolved completely the mixture is homogenized in two stages at about 70 °C. The pressure in the first stage is about 160 bar; in the second stage about 30 bar. After homogenization the oil-in-water emulsion is pasteurized for about 1 minute at about 80 °C.

The emulsion is then pumped to a Filtermat spray tower and spray-dried to provide a powder of foamer particles with a particle size smaller than about 1.5 mm. containing maximum 3 ½ % by weight moisture. About 0.5 % Silicon dioxide is added just after spray-drying to obtain a good flowability.

A traditional powdered instant iced coffee product (based on a.o. sugar and instant coffee) is blended with the powdered topping as described above in a ratio of about 3 : 2.

About 15 g. of this dry mixture is put in a long drink glass. 150 ml. cold water (10 °C) is added on the dry mixture and a small mechanical mixer is used to prepare a frothy foam layer. After a number of seconds an iced coffee with a frothy foam layer on top is created. The foam height is dependent of the amount of mechanical energy which is used to prepare the foam and the amount of milk(protein) in the powdered topping.

## Claims

1. Powdered, cold-water soluble/dispersible, foamable composition, having particles that comprise a mixture of a water-soluble/dispersible foam stabiliser and a medium chain triglyceride oil, wherein at least 50 wt.% of the lipid content is formed by the medium chain triglyceride oil, with the proviso that the composition does not comprise a combination of 20-40% by weight of skim milk powder, obtainable by decomposing 50 to 95% by weight of lactose contained in the original skim milk powder, and 5 to 15% by weight of medium chain glycerides, wherein a gas is entrapped in the particles wherein the particles comprise up to about 70 wt. % of dried skimmed milk, preferably about 10-50 wt. %.

2. Composition according to claim 1, wherein the foam stabiliser is a water-soluble/dispersible protein.

3. Composition according to any of the claims 1 or 2, wherein the medium chain triglyceride is a saturated triglyceride wherein the number average chain length of the fatty acid residues of the medium chain triglyceride is 6 to 12 carbon atoms, preferably 8-10 carbon atoms.

4. Composition according to any of the preceding claims, wherein at least the majority of the particles has a diameter, as determined by the enveloping circle, of less than 1.5 mm, preferably of less than 1.2 mm, more preferably of about 0.05-0.8 mm.

5. Composition according to any of the preceding claims, wherein the particles comprise at least one component selected from the group consisting of additional proteins, additional edible oils, matrix materials, sweeteners, emulsifiers, stabilisers, free flowing agents and starches.

6. Composition according to any of the preceding claims, wherein the total lipid content is about 5-50 wt. %.

7. Composition according to any of the preceding claims, essentially free of lecithin.

8. Composition according to any of the preceding claims, comprising an alkenylsuccinic acid derivatised starch, in particular n-OSA starch, as foam stabiliser.

9. Method for preparing a composition according to any of the preceding claims, comprising providing an aqueous mixture of the medium chain triglyceride oil, the foam stabiliser and optionally one or more additional components, and thereafter drying the aqueous mixture, thereby forming the powdered composition.

10. Method according to claim 9, comprising pasteurising the aqueous mixture before drying.

11. Method according to claim 9 or 10, comprising injecting a gas into the aqueous mixture in an amount sufficient to cause foaming of the aqueous mixture.

12. Method according to any of the claims 9-11, comprising providing the particles with a free flowing agent.

13. Method according to any of the claims 9-12, wherein the mixture is spray dried in a Filtermat^{®} tower.

14. Method according to any of the claims 9-12, wherein the dried mixture is packaged without subjecting the dried mixture to an agglomeration step.

15. Food product comprising a composition according to any of the claims 1-8.

16. Food product according to claim 15, selected from the group consisting of beverages, in particular instant beverages.

17. Food product according to claim 16, wherein the beverage is selected from ice coffee, (cold) coffee flavoured beverages, ice tea, (cold) chocolate drinks, (cold) fruit beverages, (cold) sport beverages, (cold) energy beverages, (cold) healthy drinks, (cold) dairy beverages, (cold) soups, (cold) sauces, (cold) alcohol containing beverages and milkshakes.

18. Use of a composition according to any of the claims 1-8 as a foamer or topping.

## Patentansprüche

1. Pulverförmige, in kaltem Wasser lösliche/dispergierbare, schäumbare Zusammensetzung, die Partikel aufweist, die ein Gemisch aus einem in Wasser löslichen/dispergierbaren Schaumstabilisator und einem Öl eines mittelkettigen Triglycerids umfassen, wobei mindestens 50 Gew.-% des Lipidgehalts von dem Öl eines mittelkettigen Triglycerids ausgemacht werden, mit der Maßgabe, dass die Zusammensetzung keine Kombination aus 20 bis 40 Gew.-% Magermilchpulver, erhältlich durch Zersetzen von 50 bis 95 Gew.-% der in dem ursprünglichen Magermilchpulver enthaltenen Lactose, und 5 bis 15 Gew.-% mittelkettigen Glyceriden umfasst, wobei ein Gas in den Partikeln eingeschlossen ist und wobei die Partikel bis zu etwa 70 Gew.-%, vorzugsweise etwa 10 bis 50 Gew.-%, getrocknete Magermilch enthalten.

2. Zusammensetzung nach Anspruch 1, wobei der Schaumstabilisator ein in Wasser lösliches/dispergierbares Protein ist.

3. Zusammensetzung nach einem der Ansprüche 1 oder 2, wobei das mittelkettige Triglycerid ein gesättigtes Triglycerid ist, wobei die zahlenmittlere Kettenlänge der Fettsäurereste des mittelkettigen Triglycerids bei 6 bis 12 Kohlenstoffatomen, vorzugsweise 8 bis 10 Kohlenstoffatomen, liegt.

4. Zusammensetzung nach einem der vorhergehenden Ansprüche, wobei mindestens die Mehrzahl der Partikel einen Durchmesser, der durch den Hüllkreis bestimmt wird, kleiner als 1,5 mm, vorzugsweise kleiner als 1,2 mm, noch bevorzugter von etwa 0,05 bis 0,8 mm, aufweist.

5. Zusammensetzung nach einem der vorhergehenden Ansprüche, wobei die Partikel mindestens einen Bestandteil umfassen, der aus der Gruppe ausgewählt ist, die aus zusätzlichen Proteinen, zusätzlichen Speiseölen, Matrixmaterialien, Süßungsmitteln, Emulgatoren, Stabilisatoren, Rieselhilfsmitteln und Stärken besteht.

6. Zusammensetzung nach einem der vorhergehenden Ansprüche, wobei der Gesamtlipidgehalt etwa 5 bis 50 Gew.-% beträgt.

7. Zusammensetzung nach einem der vorhergehenden Ansprüche, die im Wesentlichen frei von Lecithin ist.

8. Zusammensetzung nach einem der vorhergehenden Ansprüche, die eine mit Alkenylbernsteinsäure derivatisierte Stärke, vor allem n-OSA-Stärke, als Schaumstabilisator enthält.

9. Verfahren zur Herstellung einer Zusammensetzung nach einem der vorhergehenden Ansprüche, das das Bereitstellen eines wässrigen Gemischs aus dem Öl eines mittelkettigen Triglycerids, dem Schaumstabilisator und optional einem oder mehreren zusätzlichen Bestandteilen und anschließend das Trocken des wässrigen Gemischs, wodurch die pulverförmige Zusammensetzung gebildet wird, umfasst.

10. Verfahren nach Anspruch 9, das das Pasteurisieren des wässrigen Gemischs vor dem Trocknen umfasst.

11. Verfahren nach Anspruch 9 oder 10, das das Injizieren eines Gases in das wässrige Gemisch in einer Menge umfasst, die ausreichend ist, um das Schäumen des wässrigen Gemischs hervorzurufen.

12. Verfahren nach einem der Ansprüche 9 bis 11, das das Bereitstellen der Partikel mit einem Rieselhilfsmittel umfasst.

13. Verfahren nach einem der Ansprüche 9 bis 12, wobei das Gemisch in einem Filtermat^{®}-Turm sprühgetrocknet wird.

14. Verfahren nach einem der Ansprüche 9 bis 12, wobei das getrocknete Gemisch verpackt wird, ohne das getrocknete Gemisch einem Agglomerationsschritt zu unterziehen.

15. Nahrungsmittel, das eine Zusammensetzung nach einem der Ansprüche 1 bis 8 umfasst.

16. Nahrungsmittel nach Anspruch 15, das aus der Gruppe ausgewählt wird, die aus Getränken, insbesondere Instantgetränken, besteht.

17. Nahrungsmitteln nach Anspruch 16, wobei das Getränk ausgewählt wird unter Eiskaffee, (kalten) Getränken mit Kaffeearoma, Eistee, (kalten) Schokoladengetränken, (kalten) Fruchtgetränken, (kalten) Sportgetränken, (kalten) Energydrinks, (kalten) Gesundheitsgetränken, (kalten) Milchgetränken, (kalten) Suppen, (kalten) alkoholhaltigen Getränken und Milkshakes.

18. Verwendung einer Zusammensetzung nach einem der Ansprüche 1 bis 8 als Schaumbildner oder Garnierung.

## Revendications

1. Composition en poudre, soluble/dispersable dans l'eau froide pouvant mousser, ayant des particules qui comprennent un mélange de stabilisateur de mousse soluble/dispersable dans l'eau et une huile à base de triglycéride à chaîne moyenne, dans laquelle au moins 50 % en poids de la teneur en lipides est formée par l'huile de triglycéride à chaîne moyenne, à condition que la composition ne comprenne pas une combinaison de 20 à 40 % en poids de poudre de lait écrémé, qui peut être obtenue en décomposant 50 à 95 % en poids de lactose contenu dans la poudre de lait écrémé initiale et 5 à 15 % en poids de glycérides à chaîne moyenne, dans laquelle un gaz est enfermé dans les particules et dans laquelle les particules comprennent jusqu'à environ 70 % en poids de lait écrémé séché, de préférence, environ 10 à 50 % en poids.

2. Composition selon la revendication 1, dans laquelle le stabilisateur de mousse est une protéine soluble/dispersable dans l'eau.

3. Composition selon l'une quelconque des revendications 1 ou 2, dans laquelle le triglycéride à chaîne moyenne est un triglycéride saturé dans lequel la taille moyenne de chaîne en nombre des résidus d'acides gras du triglycéride à chaîne moyenne est de 6 à 12 atomes de carbone, de préférence, de 8 à 10 atomes de carbone.

4. Composition selon l'une quelconque des revendications précédentes, dans laquelle au moins la majorité des particules présente un diamètre, tel que déterminé par le cercle enveloppant, de moins de 1,5 mm, de préférence, de moins de 1,2 mm, mieux encore, d'environ 0,05 à 0,8 mm.

5. Composition selon l'une quelconque des revendications précédentes, dans laquelle les particules comprennent au moins un composant sélectionné dans le groupe constitué de protéines additionnelles, d'huiles comestibles additionnelles, de matériaux de matrice, d'édulcorants, d'émulsionnants, de stabilisateurs, d'agents anti-agglutinants et d'amidons.

6. Composition selon l'une quelconque des revendications précédentes, dans laquelle la teneur totale en lipides est de l'ordre de 5 à 50 % en poids.

7. Composition selon l'une quelconque des revendications précédentes, laquelle est sensiblement exempte de lécithine.

8. Composition selon l'une quelconque des revendications précédentes, comprenant un amidon dérivatisé par l'acide alcénylsuccinique, en particulier, un amidon de type n-OSA, comme stabilisateur de mousse.

9. Procédé de préparation d'une composition selon l'une quelconque des revendications précédentes, comprenant la mise en oeuvre d'un mélange aqueux constitué de l'huile de triglycéride à chaîne moyenne, du stabilisateur de mousse et, éventuellement, d'un ou de plusieurs composants additionnels, puis le séchage du milieu aqueux de manière à former ainsi la composition en poudre.

10. Procédé selon la revendication 9, comprenant la pasteurisation du mélange aqueux avant le séchage.

11. Procédé selon la revendication 9 ou 10, comprenant l'injection d'un gaz dans le mélange aqueux en quantité suffisante pour entraîner le moussage du mélange aqueux.

12. Procédé selon l'une quelconque des revendications 9 à 11, comprenant la mise en oeuvre des particules avec un agent anti-agglutinant.

13. Procédé selon l'une quelconque des revendications 9 à 12, dans lequel le mélange est séché par pulvérisation dans une tour Filtermat®.

14. Procédé selon l'une quelconque des revendications 9 à 12, dans lequel le mélange séché est conditionné sans que l'on soumettre le mélange séché à une étape d'agglomération.

15. Produit alimentaire comprenant une composition selon l'une quelconque des revendications 1 à 8.

16. Produit alimentaire selon la revendication 15, sélectionné dans le groupe constitué des boissons, en particulier, des boissons instantanées.

17. Produit alimentaire selon la revendication 16, dans lequel la boisson est sélectionnée parmi le café glacé, les boissons aromatisées au café (froides), le thé glacé, les boissons chocolatés (froides), les boissons à base de fruits (froides), les boissons pour les sportifs (froides), les boissons énergisantes (froides), les boissons pour la santé (froides), les boissons lactées (froides), les soupes (froides), les sauces (froides), les boissons contenant de l'alcool (froides) et les milk-shakes.

18. Utilisation d'une composition selon l'une quelconque des revendications 1 à 8, comme agent moussant ou comme garniture.
